Europäisches Patentamt

(19) European Patent Office

Office européen des brevets

(11) Numéro de publication : **0 130 257 B1**

(12) **FASCICULE DE BREVET EUROPÉEN**

(45) Date de publication du fascicule du brevet :
17.05.89

(21) Numéro de dépôt : 83401341.9

(22) Date de dépôt : 29.06.83

(51) Int. Cl.⁴ : **H 04 M 3/42, H 04 M 3/50**

(54) Système et procédé de transmission de messages à un poste téléphonique par la ligne téléphonique associée à celui-ci.

(43) Date de publication de la demande :
09.01.85 Bulletin 85/02

(45) Mention de la délivrance du brevet :
17.05.89 Bulletin 89/20

(84) Etats contractants désignés :
AT BE CH DE GB IT LI LU NL SE

(56) Documents cités :
EP--A-- 0 083 893
GB--A-- 452 495
THE BELL SYSTEM TECHNICAL JOURNAL, vol. 60, no. 6, partie 2, juillet-août 1981, pages 1083-1108, American Telephone and Telegraph Company, Murray Hill, New Jersey, US. T.W. ANDERSON et al.: "Mass announcement subsystem"

(73) Titulaire : Segre-Amar, Leonello
26, avenue de la Grande-Bretagne
Monte-Carlo (MC)

(72) Inventeur : Segre-Amar, Leonello
26, avenue de la Grande-Bretagne
Monte-Carlo (MC)

(74) Mandataire : Beauchamps, Georges et al
Cabinet Z.Weinstein 20, avenue de Friedland
F-75008 Paris (FR)

Jouve, 18, rue St-Denis, 75001 Paris, France

## Description

La présente invention concerne un système de transmission de messages à un poste téléphonique par la ligne téléphonique associée à celui-ci, dans une installation téléphonique comprenant un dispositif générateur de signaux de service relatif à l'établissement de la liaison téléphonique entre ce poste et un autre poste téléphonique, un dispositif générateur de messages et des moyens de liaison permettant de relier à la dite ligne téléphonique les deux dispositifs générateurs.

Le GB-A-452 495 décrit déjà un système de ce type dans lequel le dispositif qui permet la connection alternative d'un des deux générateurs à la ligne téléphonique comporte une came rotative adaptée pour mettre un élément commutateur mobile en contact avec des éléments de contact électrique fixe reliés respectivement aux générateurs de service et de messages. Ce système connu à pour inconvénient majeur qu'il utilise un dispositif de connection qui comporte une multitude de pièces mécaniques et présente ainsi une structure complexe et encombrante. Un autre inconvénient de ce système connu réside dans le fait que le générateur de messages ne permet pas d'organiser ou de gérer l'enregistrement de messages sur un support tel qu'un disque qui pourrait ensuite être lu et transmis au poste téléphonique demandeur de l'établissement d'une liaison téléphonique avec un autre poste.

Le journal « THE BECC SYSTEM TECHNICAL JOURNAL », volume 60, n° 6 de Juillet-Août 1981 présente dans l'article de T.W. ANDERSON et al : « Mass announcement subsystem » un système qui comprend un centre administratif qui est relié à un sous-système d'émission de messages par l'intermédiaire d'un réseau téléphonique. Le centre administratif reçoit des messages qui doivent être transmis à des abonnés, en provenance par exemple d'agences de publicité, et organise la distribution de ces messages au système émetteur, à travers le réseau téléphonique. L'activité du centre administratif se limite essentiellement à recevoir des demandes de transmission de messages publicitaires et d'acheminer ces messages aux sous-systèmes géographiquement éloignés. Cette antériorité ne donne donc aucun enseignement permettant la réalisation d'un générateur de messages permettant d'organiser et de gérer l'enregistrement de messages sur un support et l'émission de ceux-ci.

La présente invention a pour but de proposer un système de transmission de messages qui présente une structure simple et comporte un générateur de messages qui est en mesure d'exercer des fonctions susmentionnées que le générateur selon le brevet britannique ne peut pas accomplir et qui ne sont révélées ni suggérées dans l'article « Mass announcement subsystem ».

Pour atteindre ce but, le système de transmission selon l'invention est caractérisé en ce que les moyens des liaisons comprennent un mélangeur à deux entrées reliées respectivement au dispositif générateur de signaux de service et au dispositif générateur de messages, la sortie du mélangeur étant reliée à la ligne téléphonique, et en ce que le dispositif du générateur de messages comporte une partie maître comprenant un dispositif d'enregistrement sur un support d'enregistrement, tel qu'un disque magnétique, susceptible de porter une pluralité de messages avantageusement sous forme numérique, des messages à transmettre et des données relatives à leur transmission, telle que leur temps de transmission, et au moins une partie esclave formant unité d'exécution et de transmission des messages contenus sur ledit support d'enregistrement au temps de transmission prédéterminé, à la ligne téléphonique, les deux parties comprenant des moyens ordinateurs tels que des microprocesseurs et des moyens mémoires appropriés.

Un mélangeur du type qui vient d'être indiqué est décrit dans l'antériorité EP-A-0083 893, déposée le 24.12.82 et publiée le 20.07.83, sans pour autant coopérer avec un dispositif générateur de messages selon la présente invention.

La présente invention sera mieux comprise, et d'autres buts, détails, caractéristiques et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 montre sous forme d'un schéma-bloc le principe d'un système de transmission de messages suivant la présente invention.

Les figures 2 et 3 montrent respectivement, sous forme d'un schéma-bloc les parties « esclaves » et « maître » du système selon l'invention.

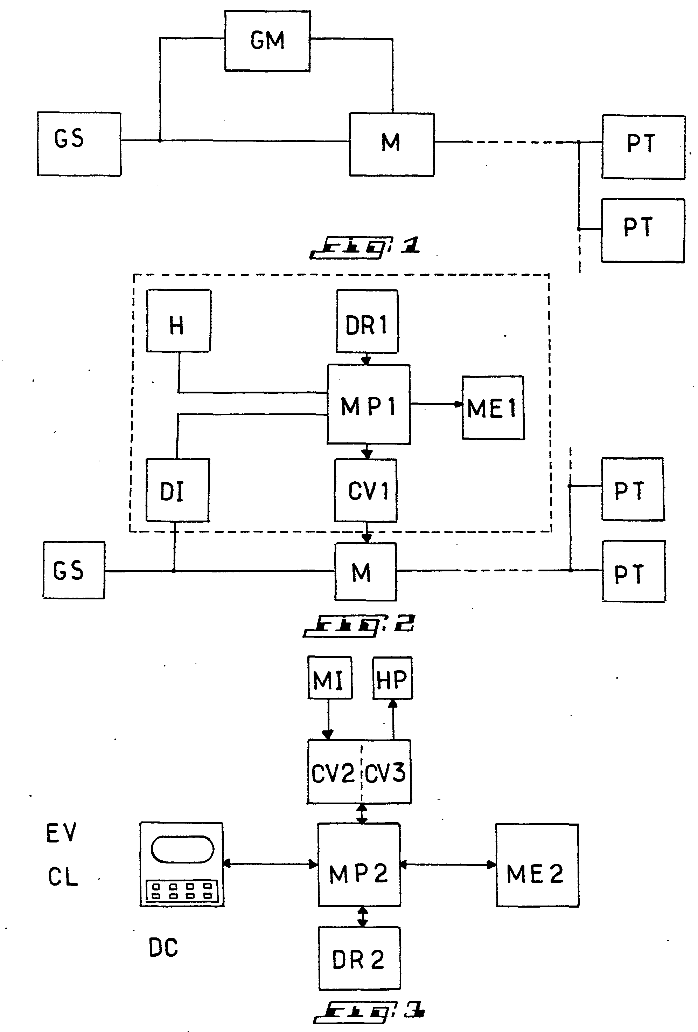

Comme le montre la figure 1, le système selon la présente invention comporte un dispositif générateur de courants spéciaux GS destinés à l'émission d'un certain nombre de signaux de service, tels que des signaux de manœuvre, de retour d'appel, d'acheminement, d'occupation, d'appel, etc.., et un ensemble générateur de messages GM, qui sont reliés aux deux entrées d'un dispositif mélangeur M dont la sortie est reliée à un certain nombre de postes téléphoniques PT à travers le réseau téléphonique non particulièrement présenté. L'ensemble générateur de messages GM comporte une partie « maître » illustrée à la figure 3 et une partie « esclave » illustrée à la figure 2. Il est possible de prévoir une partie « maître » et un certain nombre de machines « esclaves ». Ces dernières constituent des sous-ensembles destinés à être installés dans les centrales téléphoniques. Ils ont pour fonction de transmettre les messages au dispositif mélangeur M par exemple formé par un transformateur à deux enroulements primaires montés en série et un enroulement secondaire de sortie. La partie maître est adaptée pour donner l'ordre selon lesquels les messages doivent être transmis.

Suivant la figure 2, la partie esclave comporte une unité de contrôle telle qu'un ordinateur ou microprocesseur MP1 auquel sont associés à la manière illustrée un dispositif mémoire ME1, un dispositif interface DI interposé entre le microprocesseur MP1 et la ligne téléphonique, un dispositif horloge H, un dispositif récepteur d'un support d'enregistrement DR1 et un convertisseur numérique analogique CV1.

En se reportant à la figure 3, on constate que la partie maître comprend une unité de contrôle telle qu'un ordinateur ou microprocesseur MP2 auquel sont associés un dispositif de commande DC comportant un clavier alphanumérique CL et un écran de visualisation EV, un dispositif ME2, un dispositif convertisseur pourvu d'un convertisseur analogique-numérique CV2 et d'un convertisseur numérique-analogique CV3, qui sont reliés respectivement à un microphone MI et à un haut-parleur HP, ainsi qu'un dispositif récepteur d'un support d'enregistrement DR2.

Il est à noter que ces deux parties peuvent être séparées comme le montrent les figures ou combinés l'une à l'autre. Dans ce dernier cas, il suffirait de prévoir un seul microprocesseur, un seul dispositif mémoire, et un seul dispositif récepteur de support d'enregistrement.

Il est à noter qu'avantageusement les supports d'enregistrement sont formés par des disques magnétiques sur lesquels les informations sont enregistrées sous forme numérique. En effet, afin de favoriser les stratégies de transmission aisément modifiables et flexibles, il est nécessaire de pouvoir accéder le plus rapidement possible à n'importe quel message disponible. On répond à cette nécessité dans le cadre de la présente invention, en enregistrant sur disque plutôt que sur ruban magnétique.

L'enregistrement numérique du signal sonore est effectué par un échantillonnage à la fréquence de 4 KHz. Cette fréquence représente un bon compromis entre la fidélité du son et l'emploi de la mémoire du microprocesseur, puisque la bande passante de la ligne téléphonique est de 3 KHz. Ainsi, les convertisseurs analogiques-numériques reçoivent le signal audio et l'échantillonnent à la fréquence de 4 KHz, en fournissant au microprocesseur une séquence de valeur 8 bits. Les convertisseurs numériques-analogiques reçoivent des microprocesseurs une séquence de valeur 8 bits et les utilisent pour reconstituer le signal audio et le fournir pré-amplifié à la sortie.

L'écran EV et le clavier alpha-numérique CL servent à l'opérateur pour envoyer les commandes et obtenir des informations du microprocesseur. Dans le système qui vient d'être décrit, la nécessité de présence de l'opérateur est réduite au remplacement du disque contenant les messages et la séquence de transmission, au moment où il faut changer un de ces éléments, typiquement une fois par jour. Le système est conçu de façon à être insensible aux déphasages de pièces en mouvement et aux variations sur les fréquences des centrales. Il est conçu pour s'adapter automatiquement à différents standards téléphoniques.

Concernant le dispositif Horloge, il est à noter que celui-ci comprend une horloge au quartz et fournit au microprocesseur l'information de l'heure et la date actuelle. Ce dispositif horloge est doté d'une batterie en tampon pour continuer à fonctionner et maintenir l'heure à jour même quand le microprocesseur est hors service.

Concernant le fonctionnement des deux parties formant l'ensemble générateur de messages, il est à noter que le sous-ensemble maître à essentiellement pour fonction de préparer les données qui sont utilisées par le sous-ensemble esclave. La partie maître est adaptée pour permettre l'enregistrement de nouveaux messages, leur audition et la programmation des temps de transmission, comme il sera démontré plus loin.

En ce qui concerne le mode de fonctionnement du dispositif esclave, il est à noter que le programme du générateur de messages possède un tableau des horaires constitué par une séquence d'éléments du type : heure initiale-heure finale-nom du message. En utilisant ce tableau et l'heure courante fournie par l'horloge H, le programme reconnaît l'intervalle dans lequel tombe l'heure courante et transmet le message associé. Quand l'heure courante rejoint l'heure finale, le programme lit un nouvel élément du tableau, prend du disque le message relatif, le change en mémoire et commence par le transmettre jusqu'à ce que l'on atteigne la nouvelle heure finale. On doit observer que la transmission du message demande que celui-ci soit présent dans la mémoire, car il n'est pas possible d'effectuer une transmission directe du disque au convertisseur puisque ce dernier demande la transmission de 4 000 valeurs à la seconde. Cette fréquence est supérieure aux possibilités du disque qui a besoin de 15 secondes pour transférer un message complet en mémoire. A titre d'exemple, on pourrait mémoriser sur le disque huit différents messages de trois secondes, complétés par les relatives informations horaires. Bien entendu, en utilisant d'autres disques, il est possible de mémoriser un nombre de messages considérablement plus élevé.

Le fonctionnement de la partie maître et la structure du programme de l'ensemble générateur de messages sera décrit à l'aide des exemples suivants.

Après avoir mis en service l'ordinateur, c'est-à-dire dans le cas présent le microprocesseur, et après avoir allumé l'écran EV, on insère une disquette maître dans le dispositif récepteur DR2. Après actionnement approprié de touches déterminées du clavier alpha-numérique CL, il apparaît sur l'écran l'écriture « maître » et le message « introduire disquette-esclave ». On enlève alors la disquette-maître et on introduit une disquette-esclave. Après actionnement d'une touche appropriée, le programme présente la liste des messages actuellement disponibles et exige une commande. Il est possible de donner quatre commandes qui permettent d'écouter, d'enregistrer, de programmer l'horaire et de terminer le programme.

Pour l'audition d'un message, le programme fait apparaître sur l'écran l'inscription « message numéro ? ». On répond en introduisant à l'aide du clavier alpha-numérique le numéro du message désiré. Ce numéro correspond à un des messages dont le titre est écrit sur la partie supérieure de l'écran. Après quelques secondes le programme reproduit le message demandé et revient à la position de départ.

Pour l'enregistrement d'un message, on actionne la touche appropriée prévue sur le clavier CL et tape le numéro du message que l'on veut remplacer après avoir été invité par le programme. Ce dernier est maintenant préparé à l'enregistrement. Le programme fait clignoter l'inscription « enregistrement » pendant tout le temps d'enregistrement (trois secondes). Une fois l'enregistrement fini, le programme fait écouter de nouveau le message puis demande si tout est en ordre. Si l'enregistrement n'est pas satisfaisant, on actionne une touche appropriée et fait revenir le programme au point de départ. Si l'on désire écouter de nouveau le message qui vient d'être enregistré, on actionne le clavier et le programme revient au point de permettre une nouvelle audition du message. Si l'enregistrement est maintenant satisfaisant, le programme est adapté pour demander des commentaires, après actionnement approprié du clavier. On peut alors composer une brève phrase de commentaire qui identifie le message enregistré. Le programme mémorise sur le disque le nouveau message, en effaçant le vieux qui avait le même numéro et revient ensuite au point de départ.

Pour la programmation de l'horaire de transmission on actionne à nouveau le clavier, ce qui rend possible de programmer la séquence de transmission des messages. Le programme présente l'heure initiale atteinte (à partir de 00.00) et demande « jusqu'à ». On répond par introduction d'une heure finale sous la forme « heure, minutes ». Le programme est adapté pour demander ensuite le numéro du message.

On introduit le numéro du message que l'on veut transmettre dans l'intervalle de temps défini. Le programme présente la nouvelle heure initiale et revient en position initiale de la programmation de l'horaire de transmission jusqu'à ce que l'heure finale introduite soit 24,0. Quand l'heure finale est arrivée à cette position, le programme demande si tout est en ordre. S'il n'y a pas d'erreurs commises, on répond en actionnant de façon appropriée le clavier alphanumérique. Le programme mémorise alors sur le disque le tableau ainsi défini.

Pour la mise à terme du programme, on actionne le clavier et le programme fait apparaître sur l'écran « disque formé » et s'arrête. On peut maintenant faire démarrer à nouveau l'ensemble en fonctionnement esclave ou revenir au fonctionnement maître.

Pour faire fonctionner la partie esclave, on insère une disquette esclave dans le dispositif récepteur DR1 et actionne le clavier alpha-numérique. Le programme commence automatiquement par transmettre, en suivant la programmation mémorisée sur disque et en présentant sur l'écran l'heure courante, le message actuellement en transmission et l'heure finale du message en question.

Le système selon l'invention permet de communiquer de petits messages de tout genre, par exemple publicitaires ou toute autre information appropriée ou utile à la personne qui a décroché le combiné de son poste téléphonique pour appeler un autre poste et qui attend la réponse de l'usager appelé. Les messages sont insérés dans les pauses de la sonnerie, détectables à l'aide de moyens détecteurs prévus par exemple dans le dispositif interface DI.

**Revendications**

1. Système de transmission de messages à un poste téléphonique (PT) par la ligne téléphonique associée à celui-ci, dans une installation téléphonique comprenant un dispositif générateur de signaux de service (GS) relatif à l'établissement de la liaison téléphonique entre ce poste et un autre poste téléphonique, un dispositif générateur de messages (GM) et des moyens de liaison permettant de relier à ladite ligne téléphonique les deux dispositifs générateurs, caractérisé en ce que les moyens précités comprennent un mélangeur (M) à deux entrées reliées respectivement au dispositif générateur de signaux de service (GS) et au dispositif générateur de messages (GM), la sortie du mélangeur (M) étant reliée à la ligne téléphonique, et en ce que le dispositif générateur de messages (GM) comporte une partie maître comprenant un dispositif d'enregistrement sur un support d'enregistrement tel qu'un disque magnétique, susceptible de porter une pluralité de messages sous forme numérique, des messages à transmettre et des données relatives à leur transmission, telles que leur temps de transmission, et au moins une partie esclave formant unité d'exécution et de transmission des messages contenus sur ledit support d'enregistrement au temps de transmission prédéterminé, à la ligne téléphonique, les deux parties comprenant des moyens ordinateurs (MP1, MP2) tels que des microprocesseurs et des moyens mémoire (ME1, ME2) appropriés.

2. Système selon la revendication 1, caractérisé en ce que le dispositif d'enregistrement comporte des moyens convertisseurs analogiques-numériques (CV2) pourvus de moyens échantillonneurs pour effectuer l'enregistrement des messages sous forme numérique.

3. Système selon la revendication 2, caractérisé en ce les moyens convertisseurs (CV2) sont adaptés pour effectuer l'échantillonnage à une fréquence de l'ordre de 4 KHz.

4. Système selon l'une des revendications 1 à 3, caractérisé en ce que la partie esclave comporte des moyens de mémoire intermédiaire (ME1) prévus entre un dispositif récepteur DR1 du disque et des moyens convertisseurs numériques-analogiques (CV1) destinés à transmettre les messages au dispositif mélangeur M.

5. Système selon l'une des revendications précédentes, caractérisé en ce que le dispositif générateur de messages (GM) comporte un dispositif horloge (H) permettant la programmation dans le temps des messages à transmettre.

6. Procédé de transmission de messages à un poste téléphonique à l'aide d'un système suivant l'une des revendications 1 à 5, caractérisé en ce que l'on programme les moyens ordinateurs ou microprocesseurs (MP) et établit, reproduit ou modifie les messages à transmettre en fonction dudit programme.

7. Procédé selon la revendication 6, caractérisé en ce que l'enregistrement sous forme numérique des messages est effectué par un échantillonnage à une fréquence de l'ordre de 4 KHz, la transmission à partir du disque formant le support d'enregistrement au mélangeur (M) s'effectuant par l'intermédiaire d'une mémoire d'enregistrement intermédiaire.

**Claims**

1. System for the transmission of messages to a telephone set (PT) through the telephone line associated therewith, in a telephone system comprising a device for generating service signals (GS) relating to the establishing of the telephone connection between this telephone set and another telephone set, a message generating device (GM) and connecting means making it possible to connect both generating devices to the said telephone line, characterized in that the aforesaid means comprise a mixer (M) with two inputs connected to the service signal generating device (GS) and to the message generating device (GM), respectively, the output of the mixer (M) being connected to the telephone line, and in that the message generating device (GM) comprises a master portion comprising a device for recording onto a recording medium such as a magnetic disc capable of carrying a plurality of messages in digital form, messages to be transmitted and data concerning their transmission, such as their transmission time, and at least one slave portion constituting a unit for the execution and transmission of the messages contained on the said recording medium at the predetermined transmission time, to the telephone line, both portions comprising appropriate computer means (MP1, MP2) such as microprocessors and storage means (ME1, ME2).

2. System according to claim 1, characterized in that the recording device comprises analog-todigital converter means (CV2) provided with sampling means to effect the recording of the messages in digital form.

3. System according to claim 2, characterized in that the converter means (CV2) are adapted to effect the sampling at a frequency of the order of 4 kHz.

4. System according to one of claims 1 to 3, characterized in that the slave portion comprises intermediate storage means (ME1) provided between the disc-supporting device (DR1) and digital-to-analog converter means (CV1) intended to transmit the messages to the mixing device M.

5. System according to one of the preceding claims, characterized in that the message generating device (GM) comprises a clock device (H) allowing the programming in time of the messages to be transmitted.

6. Method for transmitting messages to a telephone set by means of a system according to one of claims 1 to 5, characterized in that the computer or microprocessor means (MP) are programmed and the messages to be transmitted are designed, reproduced or modified in accordance with the said program.

7. Method according to claim 6, characterized in that the recording in digital form of the messages is effected througn sampling at a frequency of the order of 4 kHz, the transmission from the disc constituting the recording medium to the mixer (M) being effected through the medium of an intermediate storage device.

**Patentansprüche**

1. Einrichtung zur Übertragung von Meldungen an eine Fernsprechstelle (PT) durch die dieser zugeordnete Fernsprechleitung bei einer Fernsprechanlage mit einer Vorrichtung zur Erzeugung von Dienstsignalen (GS) bezüglich der Herstellung der Fernsprechverbindung zwischen dieser Stelle und einer anderen Fernsprechstelle, einer Meldungsgebervorrichtung (GM) und Verbindungsmitteln, die es erlauben, die beiden Erzeugungsvorrichtungen mit der besagten Fernsprechleitung zu verbinden, dadurch gekennzeichnet, daß die besagten Mittel einen Mischer (M) mit zwei Eingängen, die an die Dienstsignalgebervorrichtung (GS) bzw. an die Meldungsgebervorrichtung (GM) angeschlossen sind, aufweisen, wobei der Ausgang des Mischers (M) an die Fernsprechleitung angeschlossen ist, und daß die Meldungsgebervorrichtung (GH) ein Herrenteil mit einer Vorrichtung zur Aufnahme auf ein Eintragungsmittel wie eine Magnetplatte, die eine Mehrzahl von Meldungen in numerischer Form, zu übertragende Meldungen und Angaben bezüglich deren Übertragung, wie deren Übertragungszeit, tragen kann, und wenigstens ein Sklaventeil, das eine Einheit zur Durchführung und zur Übertragung der auf dem besagten Eintragungsmittel enthaltenden Meldungen zur vorbestimmten Übertragungszeit zur Fernsprechleitung, aufweist, wobei beide Teile geeignete Datenverarbeitungsmittel (MP1, MP2) wie Mikroprozessoren und Speichermittel (ME1, MP2) aufweisen.

2. Einrichtung nach Anspruch 1, dadurch gekennzeichnet, daß die Aufnahmevorrichtung Analog-Digital-Wandlermittel (CV2), die mit Bemusterungsmittel zur Durchführung der Aufnahme von Meldungen in numerischer Form versehen sind,

umfaßt.

3. Einrichtung nach Anspruch 2, dadurch gekennzeichnet, daß die Wandlermittel (CV2) zur Durchführung der Bemusterung bei einer Frequenz von ungefähr 4 kHz ausgeführt sind.

4. Einrichtung nach einem der Ansprüche 1 bis 3, dadurch gekennzeichnet, daß das Sklaventeil einen Zwischenspeicher ME1 umfaßt, der zwischen einer Empfangsvorrichtung DR1 der Platte und zur Übertragung von Meldungen an die Mischervorrichtung M bestimmten Digital-Analog-Umsetzermitteln vorgesehen ist.

5. Einrichtung nach einem der vorangehenden Ansprüche, dadurch gekennzeichnet, daß die Meldungsgebervorrichtung (GM) eine das zeitgemäße Programmieren von zu übertragenden Meldungen gestattende Uhrenvorrichtung (H) aufweist.

6. Verfahren zur Übertragung von Meldungen an eine Fernsprechstelle mit Hilfe einer Einrichtung gemäß einem der Ansprüche 1 bis 5, dadurch gekennzeichnet, daß man die Datenverarbeitungs- oder Mikroprozessormittel (MP) programmiert und die zu übertragenden Meldungen in Abhängigkiet des besagten Programms herstellt, wiedergibt oder verändert.

7. Verfahren nach Anspruch 6, dadurch gekennzeichnet, daß die Aufnahme von Meldungen in numerischer Form durch eine Bemusterung bei einer Frequenz von ca. 4 kHz durchgeführt wird, wobei die Übertragung von der den Aufnahmeträger bildenden Platte ab an den Mischer (M) über einen Aufnahmezwischenspeicher geschieht.

*Fig. 1*

*Fig. 2*

*Fig. 3*